# EUROPEAN PATENT APPLICATION

(11) **EP 4 474 864 A1**
(43) Date of publication of application: **11.12.2024**
(21) Application number: 23766026.1
(22) Date of filing: 08.03.2023
(51) Int. Cl.: G01S 13/32

(54) **METHOD AND APPARATUS FOR SENSING TARGET**

(30) Priority: 11.03.2022 CN 202210242015
(71) Applicant: Huawei Technologies Co., Ltd., Shenzhen, Guangdong 518129 (CN)
(72) Inventor: DING, Genming, Shenzhen, Guangdong 518129 (CN)
(74) Representative: Gill Jennings & Every LLP
(86) International application number: PCT/CN2023/080191
(87) International publication number: WO 2023/169448

(57) **Abstract**

This application provides a target sensing method. The method includes: receiving an echo signal from a first moment to a second moment; calculating, based on the received echo signal, a feature value corresponding to each target moment, to obtain a feature value sequence, where the feature value sequence includes feature values corresponding to a plurality of target moments sorted in a time order, the target moment is a moment ranging from the first moment to the second moment, and a process of calculating the feature value corresponding to the target moment includes: obtaining, based on a plurality of target echo signals received in a sub-time period before the target moment, target spectrum data separately corresponding to the plurality of target echo signals, where the sub-time period includes the target moment, and the target spectrum data is spectrum data corresponding to a frequency whose range direction value is less than a preset value; and obtaining, based on the target spectrum data separately corresponding to the plurality of target echo signals, the feature value corresponding to the target moment; and sensing a target based on the feature value sequence. The technical solution is implemented, so that the target can be accurately sensed.

## Description

This application claims priority to Chinese Patent Application No. 202210242015.3, filed with the China National Intellectual Property Administration on March 11, 2022 and entitled "TARGET SENSING METHOD AND APPARATUS", which is incorporated herein by reference in its entirety.

### TECHNICAL FIELD

This solution relates to radar technologies, is applied to the fields such as autonomous driving, smart driving, surveying and mapping, smart homes, or smart manufacturing, and in particular, relates to a target sensing method and apparatus.

### BACKGROUND

With development of terminal technologies, more terminal devices start to implement energy saving and simplified operation experience of the terminal device by using proximity sensing. Products such as a vehicle central control screen and a home appliance control panel are used as examples. A function of sensing a target on such products requires high sensing precision, such as centimeter-level sensing precision, to avoid an accidental touch.

Currently, a target sensing method includes infrared, a 2D/3D camera, an ultrasonic sensor, a millimeter wave radar, and the like. When sensing a target, the millimeter wave radar requires a high bandwidth to achieve high-precision sensing. For example, based on a frequency-modulated continuous wave (Frequency-modulated continuous wave, FMCW), for range detection of the target, the millimeter wave radar analyzes a range-Doppler (range-Doppler) spectrum, identifies an effective moving target, and obtains a range of the target. In this method, a large bandwidth of more than 4 GHz is required to implement centimeter-level range sensing. For example, a 4 GHz bandwidth of a 60 GHz frequency band may be used to implement centimeter-level range sensing. However, the 60 GHz frequency band is not open for free use in many areas. Generally, an available 24 GHz millimeter wave frequency band has only a 250 MHz bandwidth. Under this bandwidth, a theoretical resolution obtained by using the method is only 60 cm, and centimeter-level proximity sensing cannot be implemented.

How to improve target sensing precision under a limited bandwidth condition is an urgent problem to be resolved in the industry.

### SUMMARY

Embodiments of this application provide a target sensing method and apparatus. Because in the method, a target is sensed based on a change feature of spectrum data corresponding to a frequency whose range direction value is less than a preset value, and a high bandwidth is not required. Therefore, target sensing precision can be improved under a limited bandwidth condition.

According to a first aspect, an embodiment of this application provides a target sensing method, where the method includes:
receiving an echo signal from a first moment to a second moment;
calculating, based on the received echo signal, a feature value corresponding to each target moment, to obtain a feature value sequence, where the feature value sequence includes feature values corresponding to a plurality of target moments sorted in a time order, and the target moment is a moment ranging from the first moment to the second moment, where
a process of calculating the feature value corresponding to the target moment includes: obtaining, based on a plurality of target echo signals received in a sub-time period before the target moment, target spectrum data separately corresponding to the plurality of target echo signals, where the sub-time period includes the target moment, and the target spectrum data is spectrum data corresponding to a frequency whose range direction value is less than a preset value; and obtaining, based on the target spectrum data separately corresponding to the plurality of target echo signals, the feature value corresponding to the target moment; and
sensing a target based on the feature value sequence.

In embodiments of this application, the feature value is calculated based on the spectrum data corresponding to the frequency whose range direction value is less than the preset value and that is in the received echo signal. Further, the target may be sensed based on a correspondence between the feature value and a range. The method is irrelevant to a bandwidth, and only relates to the correspondence between the feature value and the range. Therefore, the method can improve sensing precision under a low bandwidth condition.

In a possible implementation, the frequency whose range direction value is less than the preset value is a frequency whose range direction value is 0.

In a possible implementation, N-point fast Fourier transform (fast Fourier transform, FFT) calculation may be performed on a chirp (chirp) signal received by a radar, to obtain a range direction spectrum amplitude spectrum. The range direction spectrum amplitude spectrum is echo signal energy on each range-bin (range-bin). The spectrum data corresponding to the frequency whose range direction value is 0 may be an amplitude corresponding to a zero frequency. In other words, the zero frequency is a frequency whose range-bin is 0, and the amplitude corresponding to the zero frequency is an amplitude corresponding to the frequency whose range-bin is 0. In the method, the target is sensed through a change feature of the amplitude corresponding to the zero frequency, so that the sensing precision under a low bandwidth condition can be improved. It can be learned through experiments that, in embodiment of this application, under a constraint of a 250 MHz bandwidth of a 24 GHz frequency band, the method may break through radar ranging theoretical limitations, to implement a centimeter-level proximity sensing function at a low bandwidth.

In a possible implementation, the target moment is a part of or all moments from the first moment to the second moment.

In a possible implementation, the obtaining, based on the target spectrum data separately corresponding to the plurality of target echo signals, the feature value corresponding to the target moment includes: obtaining a part of target spectrum data from the target spectrum data separately corresponding to the plurality of target echo signals; and obtaining, based on the part of target spectrum data, the feature value corresponding to the target moment. It may be understood that the method can reduce a calculation amount.

With reference to the first aspect, in a possible implementation, the feature value corresponding to the target moment is a variance or a standard deviation of the target spectrum data separately corresponding to the plurality of target echo signals.

With reference to the first aspect, in a possible implementation, the sensing a target based on the feature value sequence includes:
determining a first time period from the first moment to the second moment based on the feature value sequence, where a feature value corresponding to the target moment in the first time period increases from a minimum threshold to a maximum threshold; and
when a moving speed of the target in the first time period is greater than a preset threshold, determining that the target is sensed, where the moving speed of the target in the first time period is a ratio of a difference between the maximum threshold and the minimum threshold to duration of the first time period.
With reference to the first aspect, in a possible implementation, the sensing a target based on the feature value sequence includes:
   determining a second time period from the first moment to the second moment based on the feature value sequence, where none of feature values corresponding to the target moment in the second time period is less than a maximum threshold; and
   when duration of the second time period is greater than preset duration, determining that the target is sensed.

With reference to the first aspect, in a possible implementation, the sensing a target based on the feature value sequence includes:
inputting the feature value sequence into a trained neural network, to obtain a sensing result at the second moment, where the trained neural network is obtained through training by using a feature value sequence corresponding to a sample time period as an input and a sensing result of the sample time period as a label.

With reference to the first aspect, in a possible implementation, the obtaining, based on a plurality of target echo signals received in a sub-time period before the target moment, target spectrum data separately corresponding to the plurality of target echo signals includes:
obtaining, based on the plurality of target echo signals, a spectrum data group corresponding to each target echo signal, where the spectrum data group includes a plurality of pieces of spectrum data, and the plurality of pieces of spectrum data correspond to a plurality of frequencies;
performing normalization processing on each spectrum data group, to obtain a plurality of processed spectrum data groups; and
obtaining, from each processed spectrum data group, spectrum data corresponding to a frequency whose range direction value is less than the preset value, to obtain target spectrum data corresponding to each target echo signal.

With reference to the first aspect, in a possible implementation, the obtaining, based on the plurality of target echo signals, a spectrum data group corresponding to each target echo signal includes:
calculating an intermediate frequency signal corresponding to the target echo signal; and
performing N-point Fourier transform on the intermediate frequency signal, to obtain a spectrum data group corresponding to the target echo signal, where the spectrum data group includes N pieces of data, and N is a positive integer.

According to a second aspect, an embodiment of this application provides a target sensing apparatus. The apparatus includes an antenna unit and a sensing unit.

The antenna unit is configured to receive an echo signal from a first moment to a second moment.

The sensing unit is configured to: calculate, based on the received echo signal, a feature value corresponding to each target moment, to obtain a feature value sequence, where the feature value sequence includes feature values corresponding to a plurality of target moments sorted in a time order, and the target moment is a moment ranging from the first moment to the second moment, where a process of calculating the feature value corresponding to the target moment includes: obtaining, based on a plurality of target echo signals received in a sub-time period before the target moment, target spectrum data separately corresponding to the plurality of target echo signals, where the sub-time period includes the target moment, and the target spectrum data is spectrum data corresponding to a frequency whose range direction value is less than a preset value; and obtaining, based on the target spectrum data separately corresponding to the plurality of target echo signals, the feature value corresponding to the target moment; and sense a target based on the feature value sequence.

According to a third aspect, an embodiment of this application provides a vehicle. The vehicle includes the target sensing apparatus according to the second aspect.

According to a fourth aspect, an embodiment of this application provides an electronic device. The electronic device includes one or more processors and one or more memories. The one or more memories are coupled to the one or more processors. The one or more memories are configured to store computer program code, where the computer program code includes computer instructions. When the one or more processors execute the computer instructions, the electronic device is enabled to perform the method according to any one of the possible implementations of the first aspect.

According to a fifth aspect, an embodiment of this application provides a computer program product including instructions. When the computer program product runs on an electronic device, the electronic device is enabled to perform the method according to any one of the possible implementations of the first aspect.

According to a sixth aspect, an embodiment of this application provides a computer-readable storage medium, including instructions. When the instructions are run on an electronic device, the electronic device is enabled to perform the method according to any one of the first aspect, the second aspect, or the third aspect, and the possible implementations of any one of the first aspect, the second aspect, or the third aspect.

It should be noted that some possible implementations of the second aspect, the third aspect, the fourth aspect, the fifth aspect, and the fourth aspect of this application have a same concept as some implementations of the first aspect. For beneficial effects brought by the possible implementations of the second aspect, the third aspect, the fourth aspect, the fifth aspect, and the sixth aspect, refer to the beneficial effects of the first aspect. Therefore, details are not described again.

### BRIEF DESCRIPTION OF DRAWINGS

The following describes accompanying drawings used in embodiments of this application.
FIG. 1 is a diagram of a target sensing apparatus according to an embodiment of this application;
FIG. 2 is a diagram of integration of a target sensing apparatus and a display according to an embodiment of this application;
FIG. 3 is a diagram of a detection scope according to an embodiment of this application;
FIG. 4A is a diagram of a structure of an electronic device 100 according to an embodiment of this application;
FIG. 4B is a block diagram of a software structure of an electronic device 100 according to an embodiment of this application;
FIG. 5 is a diagram of an application scenario according to an embodiment of this application;
FIG. 6 is a flowchart of a target sensing method according to an embodiment of this application;
FIG. 7 is a diagram of a detection time according to an embodiment of this application;
FIG. 8 is a diagram of a target moment according to an embodiment of this application;
FIG. 9 is a schematic flowchart of determining a feature value corresponding to a target moment according to an embodiment of this application;
FIG. 10 is a diagram of a range spectrum according to an embodiment of this application;
FIG. 11 is a diagram of a feature value sequence obtained when a target approaches according to an embodiment of this application;
FIG. 12 is a diagram of several labels according to an embodiment of this application;
FIG. 13 is a possible user interface on a display of a vehicle-mounted display according to an embodiment of this application;
FIG. 14 is a possible user interface on a display of a smart home device according to an embodiment of this application; and
FIG. 15 is a diagram of a possible functional framework of a vehicle 10 according to an embodiment of this application.

### DESCRIPTION OF EMBODIMENTS

Terms used in the following embodiments of this application are merely intended to describe specific embodiments, but are not intended to limit embodiments of this application. The terms "one", "a", "an", "the", and "this" of singular forms used in this specification and the appended claims of embodiments of this application are also intended to include plural forms, unless otherwise specified in the context clearly. It should also be understood that the term "and/or" used in embodiments of this application means and includes any or all possible combinations of one or more listed items.

To better understand a target sensing method provided in embodiments of this application, the following first describes a target sensing apparatus used in embodiments of this application.

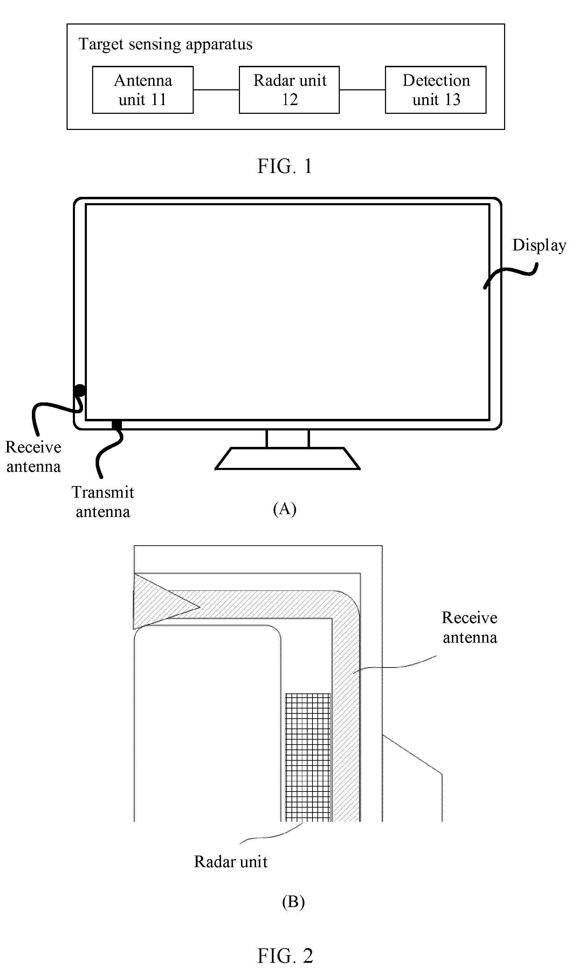

FIG. 1 is a diagram of a target sensing apparatus according to an embodiment of this application. As shown in FIG. 1, the target sensing apparatus may include an antenna unit 11, a radar unit 12 and a detection unit 13.

The antenna unit 11 includes a transmit antenna and a receive antenna, where the transmit antenna is configured to transmit a radio frequency signal, and the receive antenna is configured to receive an echo signal of the radio frequency signal.

The radar unit 12 is configured to transmit and receive signals in combination with the antenna unit 11, and process the received echo signal, to obtain spectrum data. For example, the radar unit 12 may calculate a range spectrum (Range-FFT) of the echo signal.

The detection unit 13 is used to sense a target based on the spectrum data output by the radar unit 12, to obtain a detection result.

In an implementation, the antenna unit 11 may receive an echo signal within a detection time. The radar unit 12 performs N-point Fourier transform on an intermediate frequency signal corresponding to the received echo signal, to obtain a spectrum data group corresponding to the echo signal. The detection unit 13 obtains, based on the spectrum data group corresponding to the echo signal, feature values corresponding to a plurality of target moments, and further senses a target based on the feature values corresponding to the plurality of target moments, where the feature values are obtained based on spectrum data corresponding to a frequency whose range direction value is less than a preset value.

In some embodiments, the target sensing apparatus may further include an application module. The application module is configured to: receive the detection result, and perform a corresponding operation in response to the detection result. For example, the target sensing apparatus includes an application module and a display. When determining that the target is sensed, the application module may display a preset user interface through the display, for example, wake up the target sensing apparatus that is in a screen-off state.

The target sensing apparatus may be used as a product, or may be integrated into an electronic device, so that the electronic device becomes a terminal device with a sensing capability.

The electronic device includes but is not limited to a smartphone, a tablet computer, a personal digital assistant (personal digital assistant, PDA), a wearable electronic device with a wireless communication function (for example, a smart watch or smart glasses), an augmented reality (augmented reality, AR) device, a virtual reality (virtual reality, VR) device, and the like. An example embodiment of the electronic device includes but is not limited to a portable electronic device using iOS^{®}, Android^{®}, Harmony', Windows', Linux, or another operating system. The electronic device may alternatively be another portable electronic device, for example, a laptop (Laptop). It should be further understood that, in some other embodiments, the electronic device may not be a portable electronic device but a desktop computer.

For example, the target sensing apparatus may be integrated on a display, for example, a vehicle-mounted smart screen, a central control screen, and a home device display.

FIG. 2 is a diagram of integration of a target sensing apparatus and a display according to an embodiment of this application. As shown in (A) in FIG. 2, a black solid circle in the figure represents a receive antenna, and a black solid square represents a transmit antenna. The receive antenna and the transmit antenna may be embedded in a frame of the display, and may be specifically located in a lower left corner of the display. (B) in FIG. 2 is a cross-sectional view of the display, and shows an example of an integrated form of the receive antenna. In the figure, a blank area represents the display, a horizontal-line area represents the receive antenna, and a grid area represents a radar unit. It can be learned that the receive antenna may be embedded in the display. A triangular oblique-line area may be used to receive the echo signal, so as to transmit the echo signal to the radar unit. It should be noted that the receive antenna and the transmit antenna may alternatively be disposed at other locations of the display. This is merely an example herein, and should not constitute a limitation on an integrated location of the target sensing apparatus.

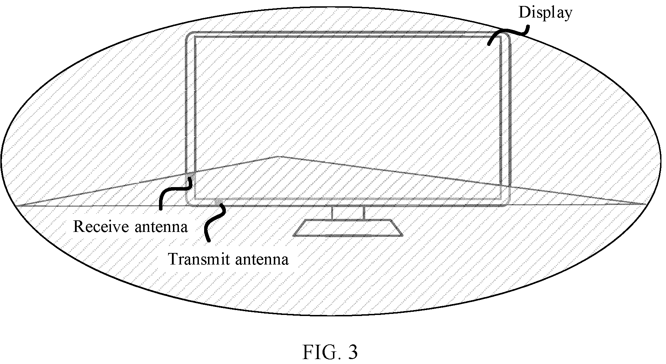

FIG. 3 shows an example of a detection scope of the target sensing apparatus shown in FIG. 2. As shown in FIG. 3, a triangular area indicates a detection scope in a vertical direction, and an ellipse area indicates a detection scope in a horizontal direction.

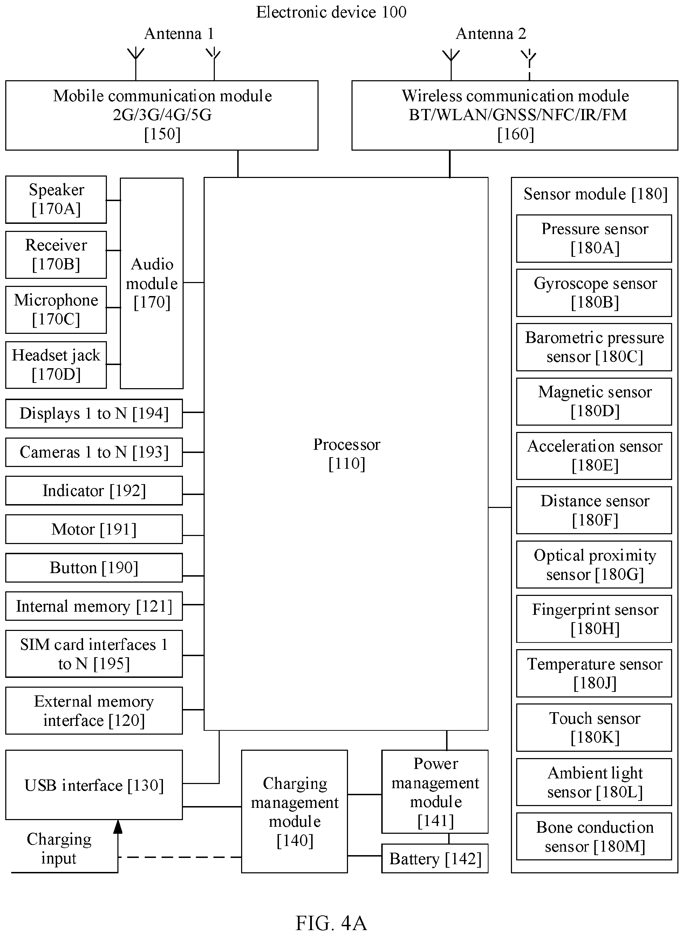

FIG. 4A is a diagram of a structure of an electronic device 100 according to an embodiment of this application.

The electronic device 100 is used as an example below to describe embodiments in detail. It should be understood that, the electronic device 100 may have more or fewer parts than those shown in the figure, may combine two or more parts, or may have a different part configuration. Components shown in the figure may be implemented by hardware that includes one or more signal processing and/or application-specific inter-integrated circuits, software, or a combination of hardware and software.

The electronic device 100 may include: a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

In some embodiments, the processor 110 may include one or more interfaces. The interface may include an inter-integrated circuit (inter-integrated circuit, I2C) interface, an inter-inter-integrated circuit sound (inter-inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (derail clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI, to implement a display function of the electronic device 100.

The GPIO interface may be configured by software. The GPIO interface may be configured for control signals or data signals. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The SIM interface may be configured to communicate with the SIM card interface 195, to implement a function of transmitting data to an SIM card or reading data in an SIM card.

The USB interface 130 is an interface that conforms to a USB standard specification, and may be specifically a mini USB interface, a micro USB interface, a USB Type-C interface, or the like. The USB interface 130 may be configured to connect to a charger to charge the electronic device 100, or may be configured to transmit data between the electronic device 100 and a peripheral device, or may be configured to connect to a headset for playing audio through the headset. The interface may be further configured to connect to another electronic device such as an AR device.

It may be understood that an interface connection relationship between the modules illustrated in embodiments of this application is merely an example for description, and does not constitute a limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger.

The power management module 141 is configured to connect to the battery 142, the charging management module 140, and the processor 110. The power management module 141 receives an input of the battery 142 and/or the charging management module 140, and supplies power to the processor 110, the internal memory 121, an external memory, the display 194, the camera 193, the wireless communication module 160, and the like.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some function modules in the mobile communication module 150 may be disposed in the processor 110. In some embodiments, at least some function modules in the mobile communication module 150 may be disposed in a same device as at least some modules of the processor 110.

The modem processor may include a modulator and a demodulator. The modulator is configured to modulate a to-be-transmitted low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (not limited to the speaker 170A, the receiver 170B, and the like), and displays an image or a video through the display 194. In some embodiments, the modem processor may be an independent component. In some other embodiments, the modem processor may be independent of the processor 110, and is disposed in a same device as the mobile communication module 150 or another function module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and transmits a processed signal to the processor 110. The wireless communication module 160 may further receive a to-be-transmitted signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or satellite based augmentation systems (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, and the one or more GPUs execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during shooting, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a shooting scenario. In some embodiments, the ISP may be disposed in the camera 193.

The camera 193 may be configured to capture a static image or a video. An optical image of an object is generated through a lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information by referring to a structure of a biological neural network, for example, a transfer mode between human brain neurons, and may further continuously perform self-learning. Applications such as smart cognition of the electronic device 100 may be implemented through the NPU, for example, image recognition, facial recognition, speech recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system and an application required by at least one function (for example, a facial recognition function, a fingerprint recognition function, and a mobile payment function). The data storage area may store data (such as facial information template data and a fingerprint information template) created during use of the electronic device 100. In addition, the internal memory 121 may include a high-speed random access memory, or may include a nonvolatile memory, for example, at least one magnetic disk storage device, a flash memory, or a universal flash storage (universal flash storage, UFS).

The electronic device 100 may implement an audio function such as music playing or recording through the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some function modules in the audio module 170 are disposed in the processor 110.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or transmitting a voice message, a user may make a sound near the microphone 170C through a mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device 100 determines pressure intensity based on the change of the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a moving posture of the electronic device 100. In some embodiments, angular velocities of the electronic device 100 around three axes (namely, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may also be used in a navigation scenario or a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D. In some embodiments, when the electronic device 100 is a clamshell phone, the electronic device 100 may detect opening and closing of a flip cover based on the magnetic sensor 180D. Further, a feature such as automatic unlocking upon opening of the flip cover is set based on a detected opening or closing state of the flip cover.

The acceleration sensor 180E may detect magnitude of acceleration of the electronic device 100 in various directions (usually on three axes). A magnitude and a direction of gravity may be detected when the electronic device 100 is still. The acceleration sensor 180E may be further configured to identify a posture of the electronic device, and is used in an application such as switching between a landscape mode and a portrait mode or a pedometer.

The distance sensor 180F is configured to measure a distance. For example, the electronic device 100 may measure the distance in an infrared manner or a laser manner. In some embodiments, in a photographing scenario, the electronic device 100 may measure a distance by using the distance sensor 180F to implement quick focusing.

In embodiments of this application, the distance sensor 180F may include the target sensing apparatus, and may specifically include an antenna unit, a radar unit, and a detection unit.

The optical proximity sensor 180G may include, for example, a light-emitting diode (LED) and an optical detector, for example, a photodiode. The light-emitting diode may be an infrared light-emitting diode. The electronic device 100 emits infrared light by using the light-emitting diode. The electronic device 100 detects infrared reflected light from a nearby object by using the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, by using the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust white balance during photographing. The ambient light sensor 180L may also cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy through the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch panel". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of the touch event. A visual output related to the touch operation may be provided through the display 194. In some other embodiments, the touch sensor 180K may alternatively be disposed on a surface of the electronic device 100 at a location different from that of the display 194.

The button 190 includes a power button, a volume button, and the like. The button 190 may be a mechanical button, or may be a touch button. The electronic device 100 may receive a button input, and generate a button signal input related to user settings and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or detached from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 is also compatible with different types of SIM cards. The SIM card interface 195 is also compatible with an external memory card. The electronic device 100 interacts with a network by using the SIM card, to implement functions such as conversation and data communication.

In embodiments of this application, the electronic device 100 may perform the target sensing method by using the processor 110, and the display 194 displays an interface obtained after a sensed target is determined.

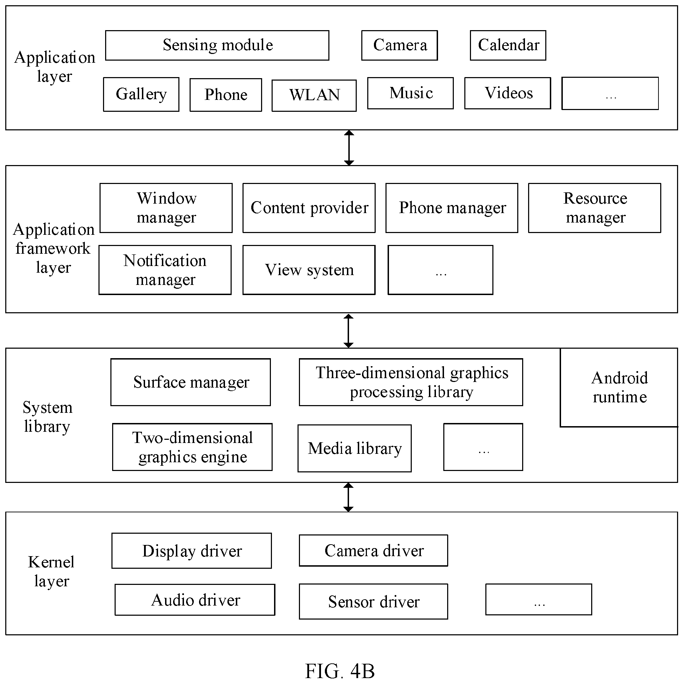

FIG. 4B is a block diagram of a software structure of an electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, a runtime (Runtime) and system library, and a kernel layer from top to bottom.

The application layer may include a series of application packages.

As shown in FIG. 4B, the application layer further includes a sensing module, and the application packages may include applications (which may also be referred to as applications) such as Camera, Gallery, Calendar, Phone, Map, Navigation, WLAN, Bluetooth, Music, Video, and Messages.

The application framework layer provides an application programming interface (application programming interface, API) and a programming framework for an application at the application layer. The application framework layer includes some predefined functions.

As shown in FIG. 4B, the application framework layer may include a window manager, a content provider, a view system, a telephony manager, a resource manager, a notification manager, and the like.

The window manager is configured to manage a window program. The window manager may obtain a size of the display, determine whether there is a status bar, perform screen locking, take a screenshot, and the like.

The content provider is configured to store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including a messages notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without a user interaction. For example, the notification manager is configured to notify download completion, give a message notification, and the like. The notification manager may alternatively display a notification in a form of a chart or a scroll bar text in a status bar at the top of the system, for example, a notification of an application program run in the background, or may display a notification in a form of a dialog interface on the screen. For example, text information is displayed in the status bar, an announcement is given, the electronic device vibrates, or the indicator light blinks.

The runtime (Runtime) includes a core library and a virtual machine. The runtime is responsible for scheduling and management of the system.

The core library includes two parts: a performance function that needs to be invoked by a programming language (for example, Java language), and a system core library.

The application layer and the application framework layer run on the virtual machine. The virtual machine executes programming files (for example, Java files) of the application layer and the application framework layer as binary files. The virtual machine is configured to implement functions such as object lifecycle management, stack management, thread management, security and exception management, and garbage collection.

The system library may include a plurality of function modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem, and provide fusion of 2-dimensional (2-Dimensional, 2D) and 3-dimensional (3-Dimensional, 3D) layers to a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The 3-dimensional graphics processing library is configured to implement drawing of 3D graphics, image rendering, synthesis, layer processing, and the like.

The 2D graphics engine is a drawing engine for 2D drawing.

The kernel layer is a layer between hardware and software. The kernel layer includes at least a display driver, a camera driver, an audio driver, a sensor driver, and a virtual card driver.

The following describes an example of a working process of software and hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. An example in which the touch operation is a touch operation, and a control corresponding to the touch operation is a control of a camera application icon is used. The camera application invokes an interface of the application framework layer to enable the camera application, then enables the camera driver by invoking the kernel layer, and captures a static image or a video through the camera 193.

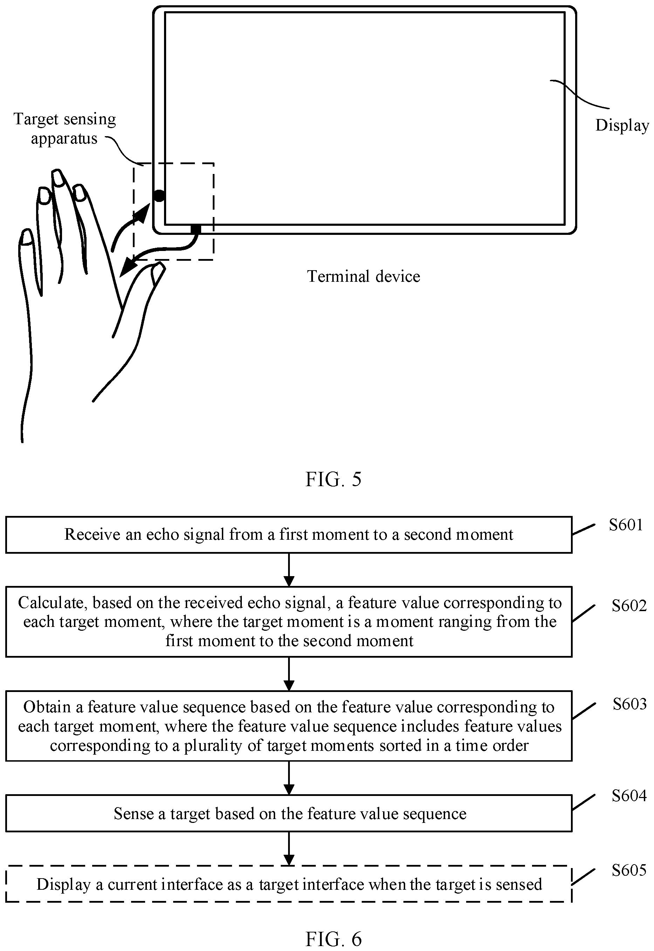

FIG. 5 is a diagram of an application scenario according to an embodiment of this application. As shown in FIG. 5, the terminal device is a terminal device with a sensing capability. The terminal device includes a display and the target sensing apparatus. The target sensing apparatus of the terminal device is located in a lower left corner of the terminal device. A user may approach the lower left corner of the display with a hand, and an echo signal is generated after a radio frequency signal is transmitted by a transmit antenna to the hand of the user. The echo signal is received by a receive antenna. The terminal device may determine, based on the received echo signal, whether a target approaches, so as to display a corresponding interface through the display when the target approaches.

A target sensing method provided in embodiments of this application is described by using the scenario in FIG. 5 as an example.

FIG. 6 is a flowchart of the target sensing method according to an embodiment of this application. The method may be performed by the terminal device shown in FIG. 5, and the method may include some or all of the following steps.

**S601: Receive an echo signal from a first moment to a second moment.**

The first moment to the second moment may also be referred to as a detection time.

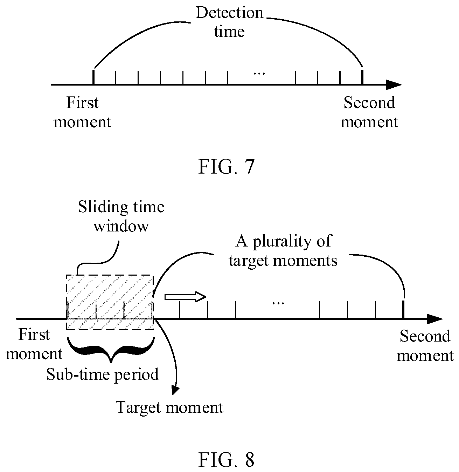

FIG. 7 is a diagram of the detection time according to an embodiment of this application. As shown in FIG. 7, the detection time is a time period from the first moment to the second moment, and the time period includes a plurality of moments.

In some embodiments, the terminal device may be in a detection state in real time, that is, transmit a radio frequency signal through a transmit antenna and receive an echo signal of the radio frequency signal through a receive antenna in real time.

In some other embodiments, the terminal device may start to receive an echo signal when receiving a user operation. For example, the terminal device detects a target through the target sensing apparatus when the terminal device is in a power-on state, and does not detect a target when the terminal device is in a sleep state. For another example, a target application may invoke the sensing capability. When detecting a user operation input by the user for the target application, the terminal device may start to receive an echo signal, to detect a target.

In an implementation, before the echo signal is received, key parameters of a radio frequency signal of a radar, such as a bandwidth, a frame rate, and a quantity of chirp signals, may be preconfigured. For example, the radar may use an FMCW modulation mode, a bandwidth B is set to β≤B≤250 MHz, and a value of β is set to 200 MHz. If a value of B is 250 MHz, a theoretical resolution is 60 cm under traditional radar ranging. The frame rate of the radar is set to 20 frames per second or more, and each frame includes k chirp signals, where k is a positive integer. It should be noted that the foregoing is merely an example of a transmit signal, and setting of parameters of the radio frequency signal is not limited herein. The chirp signal is a signal whose frequency changes continuously and linearly during duration of the chirp signal. In other words, the chirp signal is a linear frequency-modulated signal, and is a common radar signal.

**S602: Calculate, based on the received echo signal, a feature value corresponding to each target moment, where the target moment is a moment ranging from the first moment to the second moment.**

There are a plurality of target moments from the first moment to the second moment. For example, there are M moments from the first moment to the second moment, where M is a positive integer greater than 1. There are m target moments from the first moment to the second moments, where m is a positive integer not greater than M. A quantity of target moments is not limited herein.

In some embodiments, a process of calculating the feature value corresponding to the target moment may include: determining, for each target moment, a sub-time period corresponding to the target moment, where the sub-time period includes the target moment; obtaining, based on a target echo signal received in the sub-time period corresponding to the target moment, target spectrum data corresponding to each target echo signal, where the target spectrum data is spectrum data corresponding to a frequency whose range direction value is less than a preset value; and obtaining, based on target spectrum data separately corresponding to the plurality of target echo signals, the feature value corresponding to the target moment. For example, the target spectrum data may be an amplitude of a zero frequency. In this case, an amplitude of a zero frequency corresponding to each target echo signal may be obtained based on the target echo signal received in the sub-time period corresponding to the target moment. Further, the feature value corresponding to the target moment may be calculated based on obtained amplitudes of a plurality of zero frequencies.

In an implementation, the sub-time period corresponding to the target moment may be determined by using a sliding time window, so that the feature value corresponding to the target moment may be determined based on the plurality of target echo signals received in the sub-time period. FIG. 8 is a diagram of the target moment according to an embodiment of this application. As shown in FIG. 8, an oblique-line area represents a sliding time window. In FIG. 8, for example, three moments represent duration of the sliding time window. In this case, a first target moment and a sub-time period corresponding to the target moment are shown in FIG. 8. A target moment and a sub-time period corresponding to the target moment may be determined each time the sliding time window slides by one step. It is assumed that a step of the sliding time window is one moment. In this case, all moments from the first moment to the second moment except first three moments may be target moments. Therefore, the plurality of target moments from the first moment to the second moment may be shown in FIG. 8. In other words, it is assumed that the detection time includes Q moments and the sliding time window includes q moments. In this case, a quantity of target moments is not greater than Q-q, and a quantity of feature values is not greater than Q-q, where Q is a positive integer greater than 1, and q is a positive integer greater than 0.

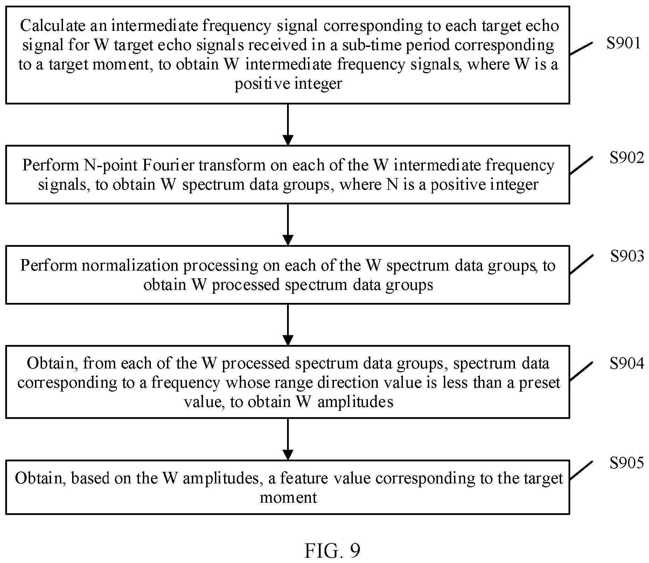

The following uses one target moment as an example to describe a method for determining a feature value corresponding to the target moment. FIG. 9 is a schematic flowchart of determining the feature value corresponding to the target moment according to an embodiment of this application. The method includes some or all of the following steps.

S901: Calculate an intermediate frequency signal corresponding to each target echo signal for W target echo signals received in a sub-time period corresponding to the target moment, to obtain W intermediate frequency signals, where W is a positive integer.

The W target echo signals may be a part or all of echo signals received in the sub-time period corresponding to the target moment. In other words, the W target echo signals may be extracted from the received echo signals. Specifically, extraction may be performed according to a preset rule. For example, extraction is performed at a preset time interval.

In some embodiments, a radio frequency signal may be an FMCW signal. When the FMCW signal is continuously transmitted, every chirp echo signal may be received by a fixed single receive antenna. Further, an intermediate frequency signal corresponding to each chirp echo signal is separately obtained. A signal obtained by processing, by a mixer, a local oscillator signal of a radar and an echo signal (which is a signal reflected by a target object after the radar sends a signal) received by the radar is an intermediate frequency signal.

S902: Perform N-point Fourier transform on each of the W intermediate frequency signals, to obtain W spectrum data groups, where N is a positive integer.

Each spectrum data group includes N pieces of spectrum data. One piece of spectrum data is an amplitude corresponding to one frequency.

In an implementation, it is assumed that r(n) is an intermediate frequency signal of a single chirp signal of a receive antenna, where n is a quantity of samples in a single chirp signal period, and n is a positive integer. In this case, FFT calculation may be performed on r(n), that is, 1-dimensional (1D)-FFT calculation is performed, to obtain a range-FFT of the intermediate frequency signal, where one frequency on the range-FFT corresponds to one range value and one reflection strength value (namely, amplitude), and the range-FFT has n frequencies. A sequence of all amplitudes in the intermediate frequency signal is a spectrum data group of the intermediate frequency signal, and one piece of spectrum data in the spectrum data group is an amplitude corresponding to one frequency. The range-FFT is a frequency domain signal (complex value or modulus value) obtained by performing N-point FFT calculation on the chirp signal.

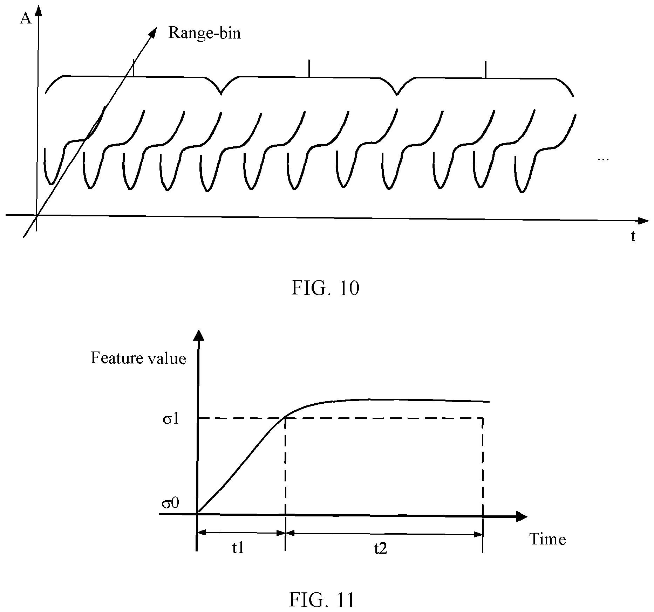

FIG. 10 is a diagram of a range spectrum according to an embodiment of this application. As shown in FIG. 10, t represents a time, A represents an amplitude, and one waveform corresponds to one chirp signal. One frame of four chirp signals is used as an example.

S903: Perform normalization processing on each of the W spectrum data groups, to obtain W processed spectrum data groups.

A normalization method may be a method like (0, 1) standardization or Z-score standardization. A normalization processing method is not limited herein.

S904: Obtain, from each of the W processed spectrum data groups, spectrum data corresponding to a frequency whose range direction value is less than a preset value, to obtain W amplitudes.

The spectrum data corresponding to the frequency whose range direction value is less than the preset value is an amplitude corresponding to the frequency whose range direction value is less than the preset value, namely, an amplitude corresponding to a frequency whose range-bin is 0. The range-bin refers to each frequency in the range-FFT, and each frequency corresponds to information about a range between the radar and the target object. Therefore, each frequency may be defined as a range-bin.

S905: Obtain, based on the W amplitudes, the feature value corresponding to the target moment.

In some embodiments, a variance or a standard deviation of the W amplitudes may be calculated, to obtain a statistical value *σₜ*, and the statistical value is used as the feature value *σₜ* corresponding to the target moment.

In an implementation, w amplitudes may alternatively be evenly extracted from the W amplitudes at intervals. The w amplitudes are calculated, to obtain a statistical value *σₜ*, and the statistical value is used as the feature value *σₜ* corresponding to the target moment. It may be understood that the method can reduce a calculation amount.

**S603: Obtain a feature value sequence based on the feature value corresponding to each target moment, where the feature value sequence includes feature values corresponding to a plurality of target moments sorted in a time order.**

In some embodiments, feature values corresponding to a part or all target moments from the first moment to the second moment may be used as the feature value sequence. The sliding time window shown in FIG. 8 is used as an example. After the feature value corresponding to the target moment is determined based on the sub-time period corresponding to the target time, assuming that a step of the sliding time window is 1, a sub-time period corresponding to one target moment may be determined each time the sliding time window slides by one step. Further, the feature value corresponding to the target moment may be determined based on the sub-time period corresponding to the target moment. Until a feature value when the target moment is the second moment is obtained, feature values corresponding to all target moments are obtained, that is, the feature value sequence is obtained.

In some other embodiments, normalization processing may be first performed on feature values corresponding to a part or all target moments from the first moment to the second moment, and then normalized feature values obtained after the normalization processing are used as a feature value sequence. For example, feature values corresponding to all target moments may be normalized in a normalization manner such as a minimum-maximum scaling (Min-Max scaling) linear function normalization or a logarithmic function. A parameter in normalization, such as a maximum value and a minimum value, may be set to a globally same value, instead of a maximum value and a minimum value of feature values corresponding to all target moments.

**S604: Sense a target based on the feature value sequence.**

The target may be a detected object, and the target is not limited herein. In the scenario shown in FIG. 5, the target may be the hand of the user.

In some embodiments, whether a target is sensed may be determined based on a maximum threshold, a minimum threshold, and a feature value sequence. The minimum threshold and the maximum threshold are preset values.

For example, the following describes a method for determining a minimum threshold and a maximum threshold. A correspondence between a feature value and a range value may be determined first. For example, a range corresponding to each feature value may be collected in advance. Then, linear or monotonic nonlinear (such as a logarithmic curve) fitting is performed on a feature value and a range value corresponding to the feature value, to map the feature value on the range value, to obtain a correspondence between the feature value and the range value. Further, based on the correspondence, a feature value corresponding to a minimum sensing range is determined as the maximum threshold, and a feature value corresponding to a maximum sensing range is determined as the minimum threshold. For example, a sensing range is from the minimum sensing range to the maximum sensing range. For example, if the sensing range is 5 cm to 30 cm, the minimum threshold may be a feature value corresponding to 30 cm, and the maximum threshold may be a feature value corresponding to 5 cm.

In an implementation, a time period in which the feature value increases from the minimum threshold to the maximum threshold from the first moment to the second moment is determined as a first time period based on the feature value sequence. Further, when a moving speed of the target in the first time period is greater than a preset threshold or duration of the first time period is greater than preset duration, it is determined that the target is sensed, where the moving speed of the target in the first time period is a ratio of a difference between the maximum threshold and the minimum threshold to the duration of the first time period. In other words, the terminal device may determine, based on the feature value sequence, the time (that is, the first time period) at which the target moves from the maximum sensing range to the minimum sensing range and the moving speed or stay duration of the target, to determine that a case in which the moving speed is too fast or the stay duration is too short as an accidental touch. It can be understood that, according to the method, unnecessary operations caused by accidental touch by the user to the terminal device can be reduced.

For example, the first time period is from the first moment to the second moment. In other words, the terminal device determines that the feature value at the first moment is the minimum threshold, the feature value at the second moment is the maximum threshold, and the feature values increase from the minimum threshold to the maximum threshold from the first moment to the second moment. In addition, when the moving speed of the target from the first moment to the second moment is greater than the preset threshold or the duration from the first moment to the second moment is greater than the preset duration, the terminal device may determine that the target is sensed at the second moment, so that a next step, such as step S605, may be performed.

Optionally, the duration of the detection time (that is, the duration from the first moment to the second moment) may be set to the preset duration. A detection start moment to a detection end moment of the terminal device includes a plurality of detection times, and the detection time may be determined based on a sliding time window method. It is assumed that a step is one moment, when the terminal device determines that the target is sensed at a second moment of a detection time based on the first time period, so that the user moves the target to the minimum sensing range to determine the sensed target, and a next operation is triggered. For example, if the sensing range is from 5 cm to 30 cm, when the user moves the hand from 30 cm to 5 cm and a moving speed meets a preset condition, the terminal device may determine, when the target moves to 5 cm, that the target is sensed.

In another implementation, a time period in which none of feature values is less than a maximum threshold from the first moment to the second moment is determined as a second time period based on the feature value sequence. Further, when duration in the second time period is greater than the preset duration, it is determined that the target is sensed. That none of the feature values is less than the maximum threshold means that a target range is less than or equal to the minimum sensing range. In other words, in the method, it is determined that the target is sensed when the target is within the minimum sensing range and stays for the preset duration. For example, if the sensing range is from 5 cm to 30 cm, when the user moves the hand from 30 cm to a range less than or equal to 5 cm and stays in the range for the preset duration, the terminal device determines that the target is sensed.

FIG. 11 is a diagram of a feature value sequence when a target approaches according to an embodiment of this application. FIG. 11 shows an example of a change of a feature value when a target approaches. As shown in FIG. 11, a horizontal coordinate is time, and a vertical coordinate is a range. It is assumed that a minimum threshold σ0 is a feature value corresponding to 30 cm, and a maximum threshold σ1 is a feature value corresponding to 5 cm, it may be determined that t1 is the first time period, and t2 is the second time period. In other words, when the target is located at 30 cm, the feature value is the minimum threshold α0. When the target moves from 30 cm to 5 cm, the feature value increases from the minimum threshold σ0 to the maximum threshold σ1. A time period in which the feature value increases from the minimum threshold σ0 to the maximum threshold σ1 is the first time period. When the target is located at a location whose range is less than 5 cm, the feature value is greater than the maximum threshold σ1. A time period in which the feature value is greater than the maximum threshold σ1 is the second time period.

In some other embodiments, it may be determined, based on a trained neural network, whether the target is sensed. For example, the feature value sequence may be input into the trained neural network, to obtain a sensing result at the second moment, where the trained neural network is obtained through training by using a feature value sequence corresponding to a sample time period as an input and a sensing result of the sample time period as a label. The neural network may perform binary classification training by using a long short-term memory (LSTM, Long Short-Term Memory) network, and a softmax layer is used as an output to obtain a classification result. The classification result may be 0 or 1, where 0 indicates that a sensing result of the feature value sequence is that no target is sensed, and 1 indicates that a sensing result of the feature value sequence is that a target is sensed.

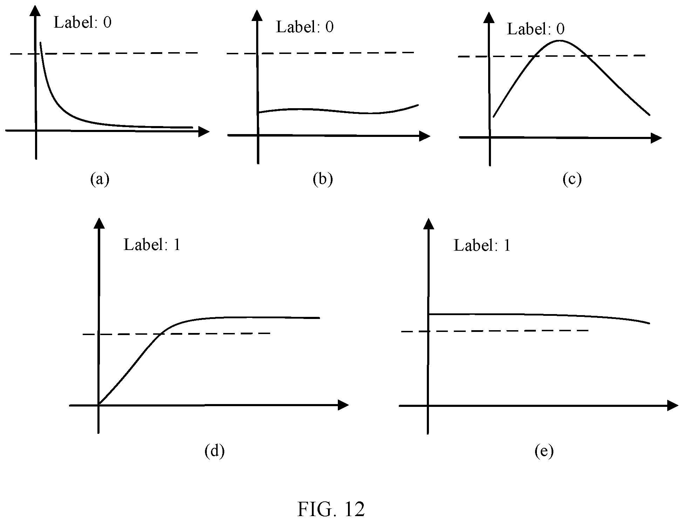

An example of implementation of training a neural network is provided as follows: First, sample data may be obtained, where the sample data includes feature value sequences corresponding to a plurality of sample time periods and sample labels corresponding to the plurality of feature value sequences. The sample label indicates a sensing result of the sample time period. For example, the sample label may be 0 and 1. A sample label of a feature value sequence whose feature value sequences are all greater than a maximum threshold and whose duration corresponding to the feature value sequence exceeds a preset value is marked as 1, and another sample label is marked as 0. Further, the feature value sequence corresponding to the sample time period is input into the neural network. An error between the label output by the neural network and the sample label is obtained. The neural network is optimized based on the error, and a trained neural network is obtained when the error meets a preset threshold. For a method for marking a sample label, refer to the marking case shown in FIG. 12.

FIG. 12 is a diagram of several labels according to an embodiment of this application. In FIG. 12, a horizontal coordinate is time, a vertical coordinate is a feature value, a dashed line indicates a maximum threshold, and a curve is a curve generated based on a correspondence between a feature value and a time. For example, (a), (b), and (c) in FIG. 12 show three cases in which the label is 0. In other words, when the feature value is not greater than a maximum threshold within a detection time or duration in which the feature value is greater than the maximum threshold is less than preset duration, it is determined that no target is sensed within the detection time, and a feature value sequence is marked as 0. For example, (d) and (e) in FIG. 12 show two cases in which the label is 1. In other words, when duration in which the feature value is greater than the maximum threshold within a detection time is greater than preset duration, it is determined that no target is sensed within the detection time, and a feature value sequence is marked as 1.

**S605: Display a current interface as a target interface when a target is sensed.**

The target interface may be determined based on an application scenario of the terminal device. This is not limited herein.

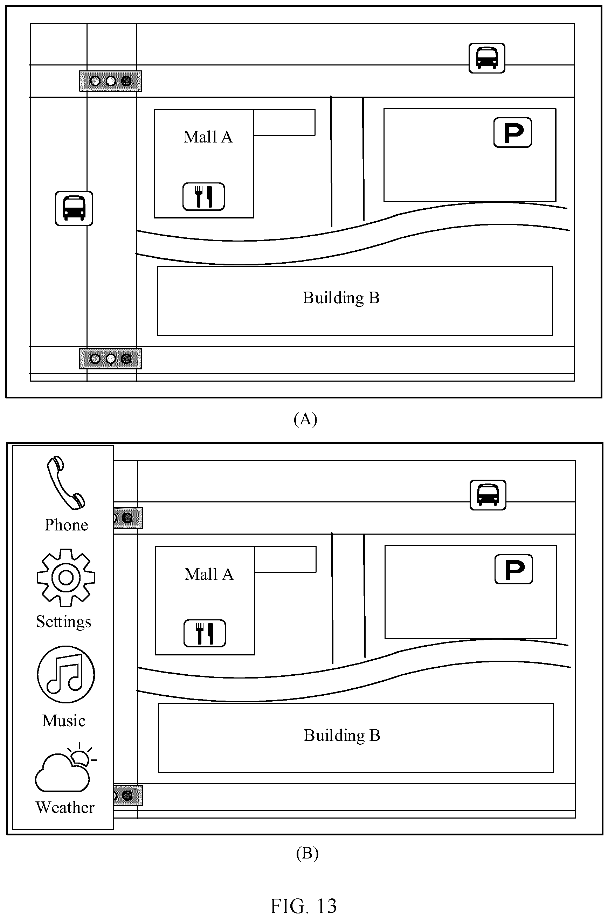

For example, in an in-vehicle scenario, the terminal device may be a vehicle-mounted display, and a sensing function is used by the vehicle-mounted display to display menu content when a target is sensed. FIG. 13 shows an example of a possible user interface on a display of a vehicle-mounted display. It is assumed that (A) in FIG. 13 is an interface of the display before a target is sensed. When the vehicle-mounted display senses the target, an interface shown in (B) in FIG. 13 may be displayed through the display. As shown in (B) in FIG. 13, a menu is on a left side of the interface, and the menu includes options such as Phone, Settings, Music, and Weather. It may be understood that a secondary submenu may be popped up on a vehicle-mounted central control screen when proximity of a hand of a user is sensed, so that distraction of a driver can be reduced by reducing an operation time of the user, and driving safety can be improved.

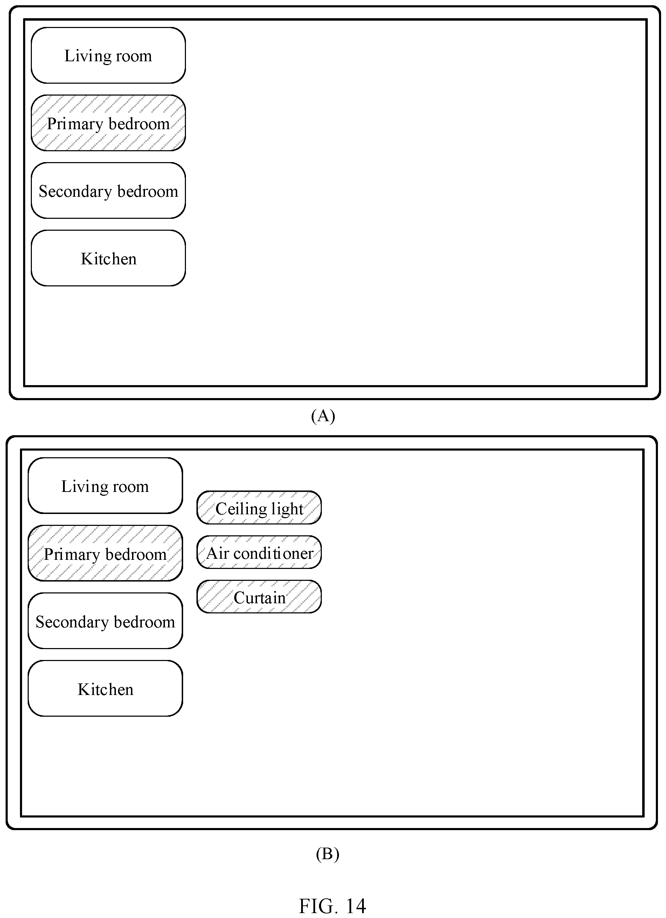

For another example, in a home scenario, the terminal device may be a smart home device, and the sensing function is used by the smart home device to display content of a secondary menu on a display when the smart home device senses a target. FIG. 14 shows an example of a possible user interface on a display of a smart home device. It is assumed that (A) in FIG. 14 is an interface of the display before a target is sensed. The interface displays option bars such as a living room, a primary bedroom, a secondary bedroom, and a kitchen. An oblique line area indicates that a current option bar is selected, that is, the oblique line area bedroom is in a selected state. When sensing the target, the smart home device may display, trough the display, an interface shown in (B) in FIG. 14. As shown in (B) in FIG. 14, the interface displays a secondary menu of the primary bedroom, and the secondary menu includes options such as a ceiling lamp, an air conditioner, and a curtain.

For another example, the terminal device may be a home appliance device. When the home appliance device senses a target, a display panel is woken up. It may be understood that this method can reduce power consumption of the device.

It may be understood that the vehicle-mounted scenario shown in FIG. 13 and the home scenario shown in FIG. 14 are merely example implementations of embodiments of this application, and application scenarios of embodiments of this application include but are not limited to the foregoing scenarios. Interfaces shown in FIG. 13 and FIG. 14 are merely example interfaces provided in embodiments of this application, and should not be construed as a limitation on embodiments of this application.

In some embodiments, the foregoing embodiment may not include step S605. Alternatively, the foregoing embodiment may not include step S605, but includes another step, for example, the terminal device is driven to move after a target is sensed. This is not limited herein.

In some embodiments, the target sensing apparatus shown in FIG. 1 may be applied to a vehicle, for example, applied to a display of the vehicle. Alternatively, the target sensing method shown in FIG. 6 may be performed by a vehicle or some devices of a vehicle.

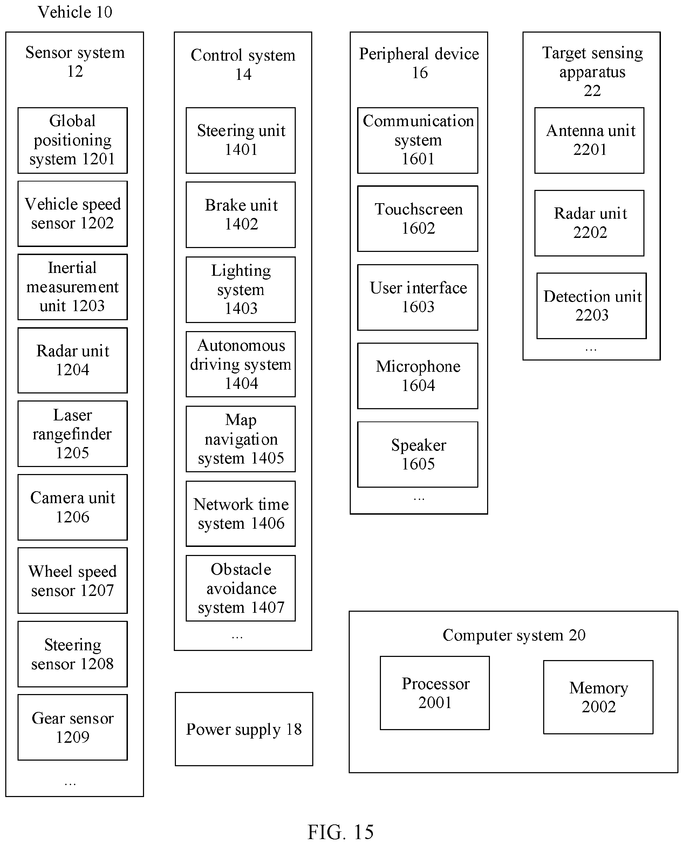

FIG. 15 is a diagram of a possible functional framework of a vehicle 10 according to an embodiment of this application. As shown in FIG. 15, the functional framework of the vehicle 10 may include various subsystems, such as a sensor system 12, a control system 14, one or more peripheral devices 16 (one device is illustrated in the figure as an example), a power supply 18, a computer system 20, and a target sensing apparatus 22 shown in the figure. Optionally, the vehicle 10 may further include another functional system, for example, an engine system that provides power for the vehicle 10. This is not limited in this application.

Specifically, the sensor system 12 may include a plurality of detection apparatuses. The detection apparatuses can sense measured information, and convert the sensed information into an electrical signal or other information in a required form based on a specific rule for output. As shown in the figure, the detection apparatuses may include a global positioning system (global positioning system, GPS) 1201, a vehicle speed sensor 1202, an inertial measurement unit (inertial measurement unit, IMU) 1203, a radar unit 1204, a laser rangefinder 1205, a camera unit 1206, a wheel speed sensor 1207, a steering sensor 1208, a gear sensor 1209, or another element used for automatic detection. This is not limited in this application.

The global positioning system GPS 1201 is a system that implements positioning and navigation worldwide in real time through a GPS positioning satellite. In this application, the global positioning system GPS may be configured to position the vehicle in real time, and provide geographical location information of the vehicle. The vehicle speed sensor 1202 is configured to detect a driving speed of the vehicle. The inertial measurement unit 1203 may include a combination of an accelerometer and a gyroscope, and is an apparatus that measures an angular velocity and an acceleration of the vehicle 10. For example, during driving of the vehicle, the inertial measurement unit may measure a location, an angular variation, and the like of a vehicle body based on an inertial acceleration of the vehicle.

The radar unit 1204 may also be referred to as a radar system. The radar unit senses an object by using a radio signal in a current environment of vehicle driving. Optionally, the radar unit may further sense information such as a running speed and a direction of travel of the object. In actual application, the radar unit may be configured as one or more antennas for receiving or sending a radio signal. The laser rangefinder 1205 may be an instrument that measures a distance to a target object through a modulated laser. In other words, the laser rangefinder may be configured to measure the distance to the target object. In actual application, the laser rangefinder may include but is not limited to any one or a combination of a plurality of the following elements: a laser source, a laser scanner, and a laser detector.

The camera unit 1206 is configured to capture an image such as a picture and a video. In this application, during driving of the vehicle or after starting of the camera unit, the camera unit may capture a picture of an environment in which the vehicle is located in real time. For example, in a process in which the vehicle enters or exits a tunnel, the camera unit may consecutively capture corresponding pictures in real time. In actual application, the camera unit includes but is not limited to an event data recorder, a camera, a video camera, or another element used for image shooting/video recording. A quantity of camera units is not limited in this application.

The wheel speed sensor 1207 is a sensor configured to detect a wheel speed of the vehicle. A commonly used wheel speed sensor 1207 may include but is not limited to a magneto-electric wheel speed sensor and a Hall wheel speed sensor. The steering sensor 1208, which may also be referred to as a steering angle sensor, may represent a system for detecting a steering angle of the vehicle. In actual application, the steering sensor 1208 may be configured to measure a steering angle of a steering wheel of the vehicle, or may be configured to measure an electrical signal indicative of the steering angle of the steering wheel of the vehicle. Optionally, the steering sensor 1208 may alternatively be configured to measure a steering angle of a tire of the vehicle, or may be configured to measure an electrical signal indicative of the steering angle of the tire of the vehicle. This is not limited in this application.

In other words, the steering sensor 1208 may be configured to measure any one or a combination of a plurality of the following items: the steering angle of the steering wheel, the electrical signal indicative of the steering angle of the steering wheel, the steering angle of the wheel (the tire of the vehicle), the electrical signal indicative of the steering angle of the wheel, and the like.

The gear sensor 1209 is configured to detect a current gear at which the vehicle travels. Because vehicle manufacturers are different, gears in a vehicle may also be different. An autonomous driving vehicle is used as an example. The autonomous driving vehicle supports six gears: P, R, N, D, 2, and L. The P (parking) gear is used for parking. This gear uses a mechanical apparatus of the vehicle to lock a braking part of the vehicle, so that the vehicle cannot move. The R (reverse) gear is also referred to as a reverse gear and is used to reverse the vehicle. The D (drive) gear is also referred to as a forward gear and is used to drive the vehicle on a road. The 2 (second gear) gear is also a forward gear and is used to adjust a driving speed of the vehicle. The 2 gear is usually used to drive the vehicle uphill and downhill. The L (low) gear is also referred to as a low-speed gear and is used to limit the driving speed of the vehicle. For example, on a downhill road, the vehicle enters the L gear, so that the vehicle uses engine power to brake when going downhill. A driver does not need to step on a brake for a long time to cause a danger caused by overheating of a brake pad.

The control system 14 may include a plurality of elements, for example, a steering unit 1401, a brake unit 1402, a lighting system 1403, an autonomous driving system 1404, a map navigation system 1405, a network time system 1406, and an obstacle avoidance system 1407 shown in the figure. Optionally, the control system 14 may further include elements such as a throttle controller and an engine controller that are configured to control the driving speed of the vehicle. This is not limited in this application.

The steering unit 1401 may represent a system configured to adjust a driving direction of the vehicle 10, and may include but is not limited to the steering wheel, or any other structural device configured to adjust or control the driving direction of the vehicle. The brake unit 1402 may represent a system configured to slow down the driving speed of the vehicle 10, may also be referred to as a vehicle braking system, and may include but is not limited to a brake controller, a decelerator, or any other structural devices configured to decelerate the vehicle. In actual application, the brake unit 1402 may slow down the tire of the vehicle through friction, to reduce the driving speed of the vehicle. The lighting system 1403 is configured to provide a lighting function or a warning function for the vehicle. For example, during driving of the vehicle at night, the lighting system 1403 may turn on headlamps and rear lamps of the vehicle, to provide illumination brightness for the driving of the vehicle, and ensure safe driving of the vehicle. In actual application, the lighting system includes but is not limited to the headlamps, the rear lamps, a width lamp, and a warning lamp.

The autonomous driving system 1404 may include a hardware system and a software system, and is configured to process and analyze data input to the autonomous driving system 1404, to obtain actual control parameters of the components in the control system 14, for example, expected braking pressure of the brake controller in the brake unit and expected torque of an engine. This facilitates corresponding control by the control system 14, and ensures the safe driving of the vehicle. Optionally, the autonomous driving system 1404 may further determine information such as an obstacle to the vehicle and characteristics (for example, a lane in which the vehicle is currently driven, a road boundary, and a traffic light to be passed through) of the environment in which the vehicle is located by analyzing the data. The data input to the autonomous driving system 1404 may be picture data collected by the camera unit, or data collected by the elements in the sensor system 12, for example, the steering angle of the steering wheel provided by the steering angle sensor and the wheel speed provided by the wheel speed sensor. This is not limited in this application.

The map navigation system 1405 is configured to provide map information and a navigation service for the vehicle 10. In actual application, the map navigation system 1405 may plan an optimal driving route, for example, a route with a shortest distance or a low traffic volume, based on positioning information (which may be specifically a current location of the vehicle) of the vehicle provided by the GPS and a destination address input by a user. This facilitates vehicle driving with the aid of navigation based on the optimal driving route, to reach the destination address. Optionally, in addition to providing the navigation function, the map navigation system may further provide or present corresponding map information to the user based on an actual requirement of the user, for example, present a road section for current vehicle driving on a map in real time. This is not limited in this application.

The network time system (network time system, NTS) 1406 is configured to provide a time synchronization service, to ensure that a current system time of the vehicle is synchronous with a standard network time, and help provide more accurate time information for the vehicle. In specific implementation, the network time system 1406 may obtain a standard time signal from the GPS satellite, and synchronously update the current system time of the vehicle by using the time signal, to ensure that the current system time of the vehicle is the same as a time corresponding to the obtained standard time signal.

The obstacle avoidance system 1407 is configured to predict an obstacle that possibly appears during driving of the vehicle, and control the vehicle 10 to bypass or leap the obstacle to implement normal driving of the vehicle 10. For example, the obstacle avoidance system 1407 may use the sensor data collected by the elements in the sensor system 12 to analyze and determine an obstacle that possibly appears on a driving road of the vehicle. If the obstacle is large in size, for example, a fixed construction (storied house) on a roadside, the obstacle avoidance system 1407 may control the vehicle 10 to bypass the obstacle to implement safe driving. If the obstacle is small in size, for example, a small stone on a roadside, the obstacle avoidance system 1407 may control the vehicle 10 to leap the obstacle, continue driving forward, and the like.

The peripheral device 16 may include a plurality of elements, for example, a communication system 1601, a touchscreen 1602, a user interface 1603, a microphone 1604, and a speaker 1605 in the figure. The communication system 1601 is configured to implement network communication between the vehicle 10 and another device other than the vehicle 10. In actual application, the communication system 1601 may use a wireless communication technology or a wired communication technology to implement network communication between the vehicle 10 and the another device. The wired communication technology may refer to performing communication between the vehicle and the another device by using a network cable, an optical fiber, or the like. The wireless communication technology includes but is not limited to a global system for mobile communications (global system for mobile communications, GSM), a general packet radio service (general packet radio service, GPRS), code division multiple access (code division multiple access, CDMA), wideband code division multiple access, (wideband code division multiple access, WCDMA), time-division code division multiple access (time-division code division multiple access, TD-SCDMA), long term evolution (long term evolution, LTE), wireless local area network (wireless local area network, WLAN) (such as a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared technology (infrared, IR), and the like.

The touchscreen 1602 may be configured to detect an operation instruction on the touchscreen 1602. For example, a user performs, based on an actual requirement, a touch operation on content data displayed on the touchscreen 1602, to implement a function corresponding to the touch operation, for example, play a multimedia file such as music or a video. The user interface 1603 may be specifically a touch panel configured to detect an operation instruction on the touch panel. The user interface 1603 may alternatively be a physical key or a mouse. The user interface 1603 may alternatively be a display configured to output data and display a picture or data. Optionally, the user interface 1603 may alternatively be at least one device, such as a touchscreen, a microphone, or a speaker, that belongs to a peripheral device.

The microphone 1604, also referred to as "mic" or "mike", is configured to convert a sound signal into an electrical signal. When making a call or transmitting a voice message, a user may make a sound near the microphone, to input a sound signal to the microphone. The speaker 1605, also referred to as a loudspeaker, is configured to convert an audio electrical signal into a sound signal. For example, music may be played or a hands-free call may be answered in the vehicle through the speaker 1605.

The power supply 18 represents a system used to provide power or energy for the vehicle, and may include but is not limited to a rechargeable lithium battery and a lead-acid battery. In actual application, one or more battery modules in the power supply are configured to provide electrical energy or energy for starting the vehicle. A type and a material of the power supply are not limited in this application. Optionally, the power supply 18 may be an energy source, and is configured to provide energy for the vehicle, for example, petrol, diesel fuel, anhydrous alcohol, a solar cell, or a solar panel. This is not limited in this application.

Several functions of the vehicle 10 are all implemented through control by the computer system 20. The computer system 20 may include one or more processors 2001 (one processor is shown as an example in the figure) and a memory 2002 (which may also be referred to as a storage apparatus). In actual application, the memory 2002 is inside the computer system 20, or may be outside the computer system 20, for example, may be used as a cache in the vehicle 10. This is not limited in this application.

Specifically, the processor 2001 may include one or more general-purpose processors, for example, a graphics processing unit (graphics processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), an HDD, or a solid-state drive SSD. The memory 2002 may alternatively include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. The function includes but is not limited to some or all functions in the diagram of the functional framework of the vehicle shown in FIG. 15. In this application, the memory 2002 may store a set of program code used to control the vehicle. The processor 2001 may control safe driving of the vehicle by invoking the program code. A manner of implementing safe driving of the vehicle is specifically described in detail below in this application.

Optionally, in addition to storing the program code or instructions, the memory 2002 may further store information such as a road map, a driving route, and sensor data. The computer system 20 may implement a vehicle-related function in combination with other elements in the diagram of the functional framework of the vehicle, such as the sensor and the GPS in the sensor system. For example, the computer system 20 may control the driving direction or the driving speed of the vehicle 10 based on data input of the sensor system 12. This is not limited in this application.

The target sensing apparatus 22 may include several elements, for example, an antenna unit 2201, a radar unit 2202 and a detection unit 2203 shown in FIG. 15. The target sensing apparatus 22 may further include a control unit. The control unit may be configured to control, based on a user instruction, the radar unit 2202 to transmit and receive signals through the antenna unit 2201. It should be noted that functions of some elements in the target sensing apparatus may alternatively be implemented by another subsystem of the vehicle, for example, the control unit may alternatively be an element in the control system. For another example, the target sensing apparatus 22 may not include a radar unit 2202, but implemented by the radar unit 1204.

In this application, four subsystems including the sensor system 12, the control system 14, the computer system 20, and the target sensing apparatus 22 shown in FIG. 15 are merely examples, and constitute no limitation. In actual application, the vehicle 10 may combine several elements in the vehicle based on different functions, to obtain subsystems with corresponding different functions. For example, the vehicle 10 may further include an electronic stability program (electronic stability program, ESP) system, an electric power steering (electric power steering, EPS) system, and the like, which are not shown in the figure. The ESP system may include some sensors in the sensor system 12 and some elements in the control system 14. Specifically, the ESP system may include the wheel speed sensor 1207, the steering sensor 1208, a transverse acceleration sensor, a control unit in the control system 14, and the like. The EPS system may include elements such as some sensors in the sensor system 12, some elements in the control system 14, and the power supply 18. Specifically, the EPS system may include the steering sensor 1208, a generator and a reducer in the control system 14, a battery power supply, and the like. For another example, the target sensing apparatus may alternatively include the user interface 1603, the touchscreen 1602, and the like in the peripheral device, to implement a function of receiving a user instruction.

It should be noted that FIG. 15 is merely a possible diagram of the functional framework of the vehicle 10. In actual application, the vehicle 10 may include more or fewer systems or elements. This is not limited in this application.

The vehicle 10 may be a car, a truck, a motorcycle, a bus, a boat, an airplane, a helicopter, a lawn mower, a recreational vehicle, a playground vehicle, a construction device, a trolley, a golf cart, a train, a handcart, or the like. This is not specifically limited in embodiments of this application.

In the foregoing embodiments, all or some of the functions may be implemented by using software, hardware, or a combination of software and hardware. When software is used to implement the embodiments, the embodiments may be implemented entirely or partially in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like.

A person of ordinary skill in the art may understand that all or some of the procedures of the methods in embodiments may be implemented by a computer program instructing related hardware. The program may be stored in a computer-readable storage medium. When the program is run, the procedures of the methods in embodiments are performed. The foregoing storage medium includes any medium that can store program code, such as a ROM, a random access memory RAM, a magnetic disk, or an optical disc.

## Claims

1. A target sensing method, wherein the method comprises:
receiving an echo signal from a first moment to a second moment;
calculating, based on the received echo signal, a feature value corresponding to each target moment, to obtain a feature value sequence, wherein the feature value sequence comprises feature values corresponding to a plurality of target moments sorted in a time order, and the target moment is a moment ranging from the first moment to the second moment, wherein
a process of calculating the feature value corresponding to the target moment comprises: obtaining, based on a plurality of target echo signals received in a sub-time period before the target moment, target spectrum data separately corresponding to the plurality of target echo signals, wherein the sub-time period comprises the target moment, and the target spectrum data is spectrum data corresponding to a frequency whose range direction value is less than a preset value; and obtaining, based on the target spectrum data separately corresponding to the plurality of target echo signals, the feature value corresponding to the target moment; and
sensing a target based on the feature value sequence.

2. The method according to claim 1, wherein the frequency whose range direction value is less than the preset value is a frequency whose range direction value is 0.

3. The method according to claim 1 or 2, wherein the feature value corresponding to the target moment is a variance or a standard deviation of the target spectrum data separately corresponding to the plurality of target echo signals.

4. The method according to any one of claims 1 to 3, wherein the sensing a target based on the feature value sequence comprises:
determining a first time period from the first moment to the second moment based on the feature value sequence, wherein a feature value corresponding to the target moment in the first time period increases from a minimum threshold to a maximum threshold; and
when a moving speed of the target in the first time period is greater than a preset threshold, determining that the target is sensed, wherein the moving speed of the target in the first time period is a ratio of a difference between the maximum threshold and the minimum threshold to duration of the first time period.

5. The method according to any one of claims 1 to 3, wherein the sensing a target based on the feature value sequence comprises:
determining a second time period from the first moment to the second moment based on the feature value sequence, wherein none of feature values corresponding to the target moment in the second time period is less than a maximum threshold; and
when duration of the second time period is greater than preset duration, determining that the target is sensed.

6. The method according to any one of claims 1 to 3, wherein the sensing a target based on the feature value sequence comprises:
inputting the feature value sequence into a trained neural network, to obtain a sensing result at the second moment, wherein the trained neural network is obtained through training by using a feature value sequence corresponding to a sample time period as an input and a sensing result of the sample time period as a label.

7. The method according to any one of claims 1 to 6, wherein the obtaining, based on a plurality of target echo signals received in a sub-time period before the target moment, target spectrum data separately corresponding to the plurality of target echo signals comprises:
obtaining, based on the plurality of target echo signals, a spectrum data group corresponding to each target echo signal, wherein the spectrum data group comprises a plurality of pieces of spectrum data, and the plurality of pieces of spectrum data correspond to a plurality of frequencies;
performing normalization processing on each spectrum data group, to obtain a plurality of processed spectrum data groups; and
obtaining, from each processed spectrum data group, spectrum data corresponding to a frequency whose range direction value is less than the preset value, to obtain target spectrum data corresponding to each target echo signal.

8. The method according to claim 7, wherein the obtaining, based on the plurality of target echo signals, a spectrum data group corresponding to each target echo signal comprises:
calculating an intermediate frequency signal corresponding to the target echo signal; and
performing N-point Fourier transform on the intermediate frequency signal, to obtain a spectrum data group corresponding to the target echo signal, wherein the spectrum data group comprises N pieces of data, and N is a positive integer.

9. A target sensing apparatus, comprising an antenna unit and a sensing unit, wherein
the antenna unit is configured to receive an echo signal from a first moment to a second moment; and
the sensing unit is configured to: calculate, based on the received echo signal, a feature value corresponding to each target moment, to obtain a feature value sequence, wherein the feature value sequence comprises feature values corresponding to a plurality of target moments sorted in a time order, and the target moment is a moment ranging from the first moment to the second moment; and sense a target based on the feature value sequence, wherein
a process of calculating the feature value corresponding to the target moment comprises: obtaining, based on a plurality of target echo signals received in a sub-time period before the target moment, target spectrum data separately corresponding to the plurality of target echo signals, wherein the sub-time period comprises the target moment, and the target spectrum data is spectrum data corresponding to a frequency whose range direction value is less than a preset value; and obtaining, based on the target spectrum data separately corresponding to the plurality of target echo signals, the feature value corresponding to the target moment.

10. A vehicle, comprising the target sensing apparatus according to claim 9.

11. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to any one of claims 1 to 8.

12. A computer program product comprising instructions, wherein when the computer program product runs on an electronic device, the electronic device is enabled to perform the method according to any one of claims 1 to 8.

13. A computer-readable storage medium, comprising instructions, wherein when the instructions are run on an electronic device, the electronic device is enabled to perform the method according to any one of claims 1 to 8.
